# EUROPÄISCHE PATENTSCHRIFT

(11) **EP 3 510 256 B1**
(45) Veröffentlichungstag und Bekanntmachung des Hinweises auf die Patenterteilung: **25.11.2020**
(21) Anmeldenummer: 17791600.4
(22) Anmeldetag: 11.10.2017
(51) Int. Cl.: F01K 23/10, F01K 13/02

(54) **VERFAHREN ZUM BETREIBEN EINES GUD-KRAFTWERKS**
METHOD FOR OPERATING A CCGT PLANT
PROCÉDÉ DE FONCTIONNEMENT D'UNE CENTRALE À CYCLE COMBINÉ À GAZÉIFICATION INTÉGRÉE

(30) Priorität: 07.11.2016 EP 16197458
(43) Veröffentlichungstag der Anmeldung: 17.07.2019
(73) Patentinhaber: Siemens Aktiengesellschaft, 80333 München (DE)
(72) Erfinder: BOROWSKI, Marc, 47445 Moers (DE); GOBRECHT, Edwin, 40885 Ratingen (DE); HEUE,Matthias, 44879 Bochum (DE); MIGL, Matthias, 80997 München (DE); SCHMID, Erich, 90449 Nürnberg (DE)
(86) Internationale Anmeldenummer: PCT/EP2017/075920
(87) Internationale Veröffentlichungsnummer: WO 2018/082879

(56) Entgegenhaltungen:
- EP-A1- 1 275 817
- EP-A1- 2 022 945
- EP-A1- 2 664 749
- EP-A1- 2 775 106

## Beschreibung

Die Erfindung betrifft ein Verfahren zum Betreiben eines GuD-Kraftwerks und das entsprechende GuD-Kraftwerk.

Unter einem GuD-Kraftwerk wird dabei ein Gas-und-Dampf-Kombikraftwerk oder Gas-und-Dampfturbinen-Kraftwerk verstanden, das die Prinzipien eines Gasturbinenkraftwerkes und eines Dampfkraftwerkes kombiniert. Eine Gasturbine dient dabei als Wärmequelle für einen nachgeschalteten Kessel, der wiederum als Dampferzeuger für die Dampfturbine wirkt.

Mit dieser Kombination wird im thermodynamischen Kreisprozess ein höherer Wirkungsgrad erreicht als mit Gasturbinen im offenen Betrieb oder in konventionell befeuerten Dampfkraftwerken. Kombikraftwerke gehören mit elektrischen Wirkungsgraden von bis zu 60 % zu den effizientesten konventionellen Kraftwerken.

Ferner sind derartige Kombikraftwerke im Kraftwerksmanagement sehr flexibel einsetzbar. Aufgrund kurzer Startzeiten und der Möglichkeit schneller Laständerungen sind sie ideale Mittellast-Kraftwerke. Vorrangig werden diese Kraftwerke im Mittellastbereich und bei Bedarf sogar im Bereich des Spitzenstroms betrieben.

Jedoch liefert die Gasturbine unterhalb einer Mindestleistung keine konstante Abgastemperatur. Dies führt beim Abfahren der Gasturbine auch zu einem Absinken der Dampftemperatur. Wird die Dampfturbine dann weiter betrieben führt dies zu einem hohem Lebensdauerverbrauch bzw. Verkürzung der Lebensdauer.

Daher wird die Dampfturbine abgefahren bevor die Gasturbine in den unteren Lastbereich gefahren wird. Für den Zeitraum des Dampfturbinenabfahrvorgangs muss die Gasturbine auf einem konstanten Leistungsniveau verharren. Dies führt - im Vergleich zum Anfahren - zu einem vergleichsweise langen Abfahrprozess. Während des Abfahrens ist ferner der Wirkungsgrad nicht optimal.

Aus der EP 2 775 106 A1 ist ein Verfahren zum Betrieb eines GuD-Kraftwerks mit einer Gasturbine und einer Dampfturbine zum Betrieb mit einer Minimallast bekannt. In Bezug auf ein Abfahren schlägt die EP 2 775 106 A1 vor, dass ein Entlasten der Dampfturbine und eine Reduzierung des Dampfdrucks derart gewählt werden, dass eine minimale Dampfturbinenlast und ein minimale Dampfdruck erreicht werden vor einer Reduzierung der Dampftemperatur, verursacht durch eine Reduzierung der Gasturbinenabgastemperatur während des Entlastens der Gasturbine.

Auch aus der EP 2 664 749 A1 ist ein GuD-Kraftwerk bekannt. Ein Controller ist vorgesehen, der einen Dampfstrom durch eine Wärmerückgewinnungseinrichtung nach einem Abfahren bewirkt.

Ferner ist aus der EP 1 275 817 A1 ein GuD-Kraftwerk bekannt, das neben einer Gasturbine und einer Dampfturbine eine Notfallölabschaltvorrichtung aufweist, die nur die Dampfturbine oder alternativ im Falle eines technischen Defektes auch die Gasturbine stoppen kann.

Es besteht daher Bedarf daran, zumindest einen Weg aufzuzeigen, wie das Abfahren beschleunigt werden kann.

Erfindungsgemäß werden bei einem Verfahren zum Betreiben eines GuD-Kraftwerks mit einer Gasturbine und eine Dampfturbine sowie einer Abfahreinrichtung die Gasturbine und die Dampfturbine mittels der Abfahreinrichtung derart betrieben, dass die Gasturbine und die Dampfturbine innerhalb eines Zeitfensters, das sich von Beginn des Abfahrvorgangs zu einem ersten Zeitpunkt bis zum Abfall der Dampftemperatur auf einen unteren Grenzwert zu einem zweiten Zeitpunkt erstreckt, im Wesentlichen zum gleichen Zeitpunkt entlastet sind und die Blockleistung auf Null fällt, wobei in dem GuD-Kraftwerk gespeicherte Wärmeenergie ein sofortiges Absinken einer Dampftemperatur auf einen Betrieb unter-halb einer Mindestleistung der Gasturbine innerhalb des Zeitfensters verhindert.

Die Erfindung macht sich dabei den Umstand zu Nutze, dass thermische Kapazitäten des GuD-Kraftwerks, wie z.B. im Rohrleitungssystem umgewälzter Dampf und Gas, aber auch in den Wandungen von Rohrleitungen, die Komponenten des GuD-Kraftwerks miteinander verbinden, ausreichend sind, um einen raschen Temperaturabfall zu verhindern, wenn die Gasturbine abgefahren wird. Mit anderen Worten, die im GuD-Kraftwerk gespeicherte Wärmeenergie verhindert ein sofortiges Absinken der Dampftemperatur bei einem Betrieb unterhalb der Mindestleistung des Gasturbine. So kann innerhalb dieses Zeitfensters, das sich von Beginn des Abfahrvorgangs bis zum Abfall der Dampftemperatur auf einen unteren Grenzwert erstreckt, die Gastturbine zeitgleich mit der Dampfturbine abgefahren werden. So kann das Abfahren beschleunigt werden. Von Vorteil, aber keine Voraussetzung ist hierbei, dass die Gasturbine eine hohe Dynamik aufweist.

Bevorzugt ist der Gasturbine ein Gasturbinen-Leistungsregler und der Dampfturbine ein Dampfturbinen-Leistungsregler zugeordnet, und dem Gasturbinen-Leistungsregler und dem Dampfturbinen-Leistungsregler wird der jeweilige Sollwert mit einem jeweiligen Abfahr-Sollwert-Verlauf vorgegeben, um die Gasturbine und die Dampfturbine zum im Wesentlichen gleichen Zeitpunkt zu entlasten. Dabei wird unter im Wesentlichen zum gleichen Zeitpunkt verstanden, dass ein Betrieb der Dampfturbine nicht zu Schäden und/oder einer Verkürzung der Lebensdauer führt. Es werden also für das Abfahren dem Gasturbinen-Leistungsregler und dem Dampfturbinen-Leistungsregler vom Normalbetrieb abweichende Sollwerte vorgegeben. Bei den Sollwerten kann es sich jeweils um eine Reihe von Werten abnehmender Größe handeln, die aufeinander abgestimmt sind und die nacheinander nach Ablauf einer jeweiligen vorbestimmten Zeitdauer auf den jeweiligen Regler aufgeschaltet werden. Die jeweiligen Regler bewirken dann eine Nachführung des jeweiligen Ist-Wertes entsprechend der jeweiligen Sollwerte.

Bevorzugt ist der Gasturbine ein Gasturbinen-Leistungsregler und der Dampfturbine ein Dampfturbinen-Leistungsregler zugeordnet, und die jeweilige Stellgröße des Gasturbinen-Leistungsreglers und des Dampfturbinen-Leistungsreglers wird jeweils mit einem Abfahr-Vorsteuer-Verlauf beaufschlagt, um die Gasturbine und die Dampfturbine zum im Wesentlichen gleichen Zeitpunkt entlastet sind. Der Abfahr-Vorsteuer-Verlauf kann jeweils eine Reihe von Werten abnehmender Größe aufweisen, die aufeinander abgestimmt sind und die nacheinander nach Ablauf einer jeweiligen vorbestimmten Zeitdauer auf den jeweiligen Regler aufgeschaltet werden. Es kann auch während des Abfahrens eine Vorsteuerung genutzt werden. Durch die Vorsteuerung wird die jeweilige Stellgröße zusätzlich mit einem Wert beaufschlagt, der unabhängig von den Zuständen der Regelstrecke ist. Die Vorsteuerung ermöglicht auf einfache Weise die Berücksichtigung des aufgrund des Sollwertverlaufs zu erwartenden Stellgrößen-Bedarfs. Da sie eine zusätzliche Steuerung ist gefährdet sie nicht die Stabilität der Regelstrecke.

Durch eine geeignete Umsetzung der Soll-Größe zur vorgesteuerten Stellgröße lässt eine dynamische Regelung ohne negative Auswirkungen auf die Regelkreisstabilität aufbauen. Die Umsetzung von Soll- zu Stellgröße erfolgt derart, dass eine aufeinander folgende Reihe abnehmender Sollwerte eine Reihe aufeinander folgender Stellgrößen zur Folge hat.

Ferner gehören zur Erfindung ein Computerprogrammprodukt zum Durchführen eines derartigen Verfahrens, ein derartiges GuD-Kraftwerk sowie ein Abfahreinrichtung für ein derartiges GuD-Kraftwerk.

Im Folgenden wird eine bevorzugte Ausführungsform des erfindungsgemäßen Verbindungselements anhand der beigefügten schematischen Zeichnungen erläutert. Es zeigt:
- Fig. 1: eine schematische Darstellung eines GuD-Kraftwerks,
- Fig. 2: eine schematische Darstellung einer Reglerstruktur für das in Fig. 1 dargestellte GuD-Kraftwerk,
- Fig. 3: eine schematische Darstellung einer weiteren Reglerstruktur für das in Fig. 1 dargestellte GuD-Kraftwerk,
- Fig. 4: eine schematische Darstellung einer Steuerungsstruktur für das in Fig. 1 dargestellte GuD-Kraftwerk, und
- Fig. 5: eine schematische Darstellung des Drehzahl- und Blockleistungsverlaufs des in Fig. 1 dargestellten GuD-Kraftwerks während des Abfahrens.

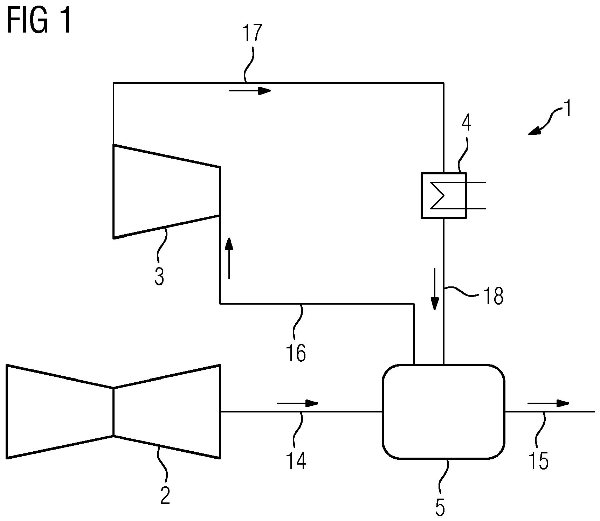

Es wird zunächst auf die Fig. 1 Bezug genommen.

In Fig. 1 ist ein GuD-Kraftwerk 1 dargestellt.

Das GuD-Kraftwerk 1 weist im vorliegenden Ausführungsbeispiel eine Gasturbine 2, eine Dampfturbine 3, einen Kondensator 4 und einen Kessel 5 auf.

Das GuD-Kraftwerk 1 kann als Mehrwellenanlage (engl. Multishaft) ausgebildet sein, bei dem die Gasturbine 2 und die Dampfturbine 3 jeweils einen Generator (nicht dargestellt) antreiben. Alternativ kann das GuD-Kraftwerk 1 auch als Einwellenanlage (engl. singleshaft) ausgebildet sein, bei der die Gasturbine 2 und die Dampfturbine 3 sowie ein Generator aus einer gemeinsamen Welle sind, wobei zusätzlich eine selbstsynchronisierenden Überholkupplung zum Abkuppeln vorgesehen sein kann.

Im Normalbetrieb wird der Gasturbine 2 Luft und Gas zugeführt. Die heißen Abgase der Gasturbine 2 werden über eine Abgasleitung 14 dem Kessel 5 zur Erzeugung von Wasserdampf zugeführt und über einen Auslass 15 abgeführt. Über eine Dampfleitung 16 wird Dampf aus dem Kessel 5 der Dampfturbine 3 zugeführt und dort entspannt. Über eine weitere Dampfleitung 17 wird der entspannte Dampf dem Kondensator 4 zugeführt, von dem Kondensat dann dem Kessel 5 über eine Kondensatleitung 18 zugeführt wird.

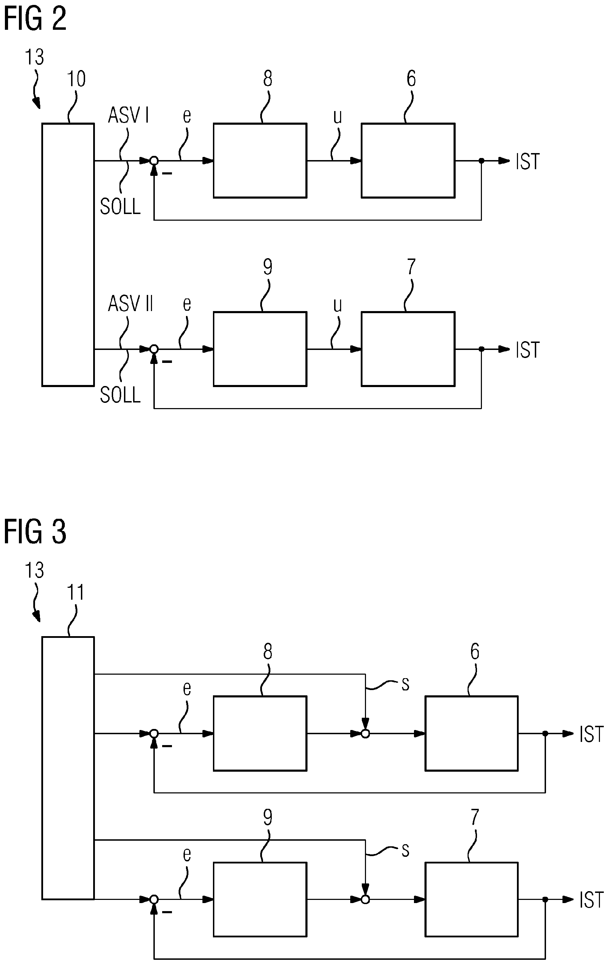

Es wird nun zusätzlich auf Fig. 2 Bezug genommen.

Dargestellt ist eine Reglerstruktur für das in Fig. 1 dargestellte GuD-Kraftwerk 1.

Die Reglerstruktur weist einen Gasturbinen-Leistungsregler 8 und einen Dampfturbinen-Leistungsregler 9 auf, wobei der Gasturbinen-Leistungsregler 8 der Gasturbine 2 - in Fig. 2 symbolisiert durch die Regelstrecke-Gasturbine 6 und der Dampfturbinen-Leistungsregler 9 der Dampfturbine 3 - in Fig. 2 symbolisiert durch die Regelstrecke-Dampfturbine 7 zugeordnet ist.

Wie an sich bekannt, wird die Ausgangsgröße der Gasturbine 2 und der Dampfturbine 3 als jeweiliger Ist-Wert IST erfasst, eine Regeldifferenz aus einem jeweiligen Soll-Wert SOLL sowie Ist-Wert IST gebildet und als Regelabweichung e dem jeweiligen Gasturbinen-Leistungsregler 8 und Dampfturbinen-Leistungsregler 9 zugeführt. Der jeweilige Gasturbinen-Leistungsregler 8 und Dampfturbinen-Leistungsregler 9 liefert dann eine jeweilige Stellgröße u, mit der die jeweilige Regelstrecke-Gasturbine 6 und Regelstrecke-Dampfturbine 7 beaufschlagt wird, um so eine gewünschte Leistung zu gewährleisten.

Während eines Abfahrens wird eine Abfahreinrichtung 13 aktiv. Die Abfahreinrichtung 13 ist in dem in Fig. 2 dargestellten Ausführungsbeispiel als Sollwertvorgabe-Vorrichtung 10 ausgebildet.

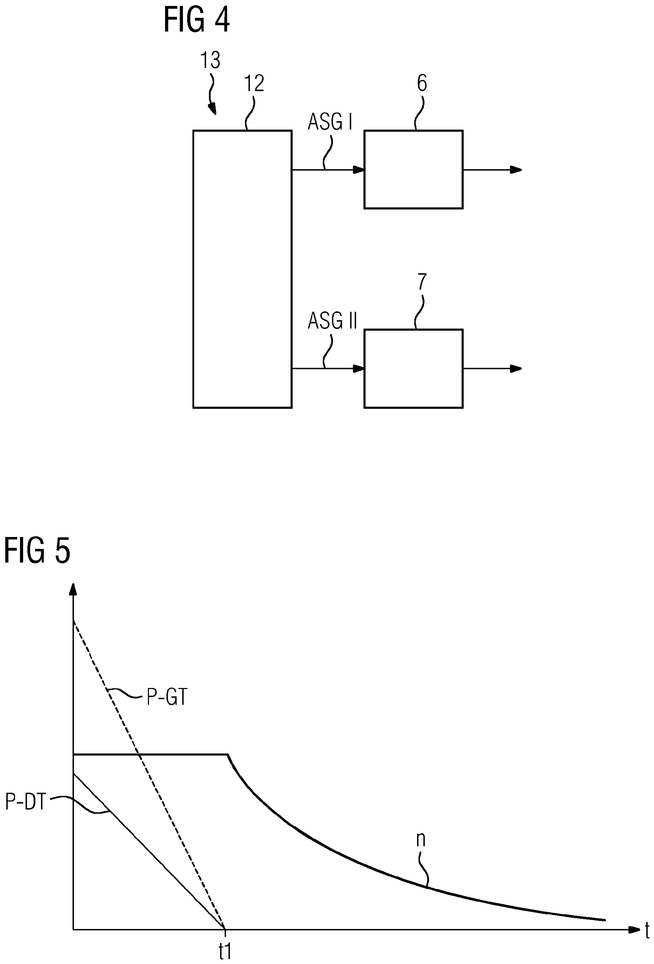

Die Abfahreinrichtung 13 schaltet einen Abfahr-Sollwert-Verlauf ASV I für die Gasturbine 2 und einen Abfahr-Sollwert-Verlauf ASV II für die Dampfturbine 3 als jeweilige Sollwerte auf den Gasturbinen-Leistungsregler 8 und Dampfturbinen-Leistungsregler 9. Dabei weisen der Abfahr-Sollwert-Verlauf ASV I für die Gasturbine 2 und der Abfahr-Sollwert-Verlauf ASV II für die Dampfturbine 3 im vorliegenden Ausführungsbeispiel jeweils eine Reihe von Werten abnehmender Größe auf, die aufeinander abgestimmt sind und die nacheinander nach Ablauf einer vorbestimmten Zeitdauer auf den Gasturbinen-Leistungsregler 8 und Dampfturbinen-Leistungsregler 9 aufgeschaltet werden, um so die Gasturbine 2 und die Dampfturbine 3 zum im Wesentlichen gleichen Zeitpunkt t1 (siehe Fig. 5) entlastet sind.

Es wird nun zusätzlich auf Fig. 3 Bezug genommen.

Dargestellt ist eine weitere Reglerstruktur für das in Fig. 1 dargestellte GuD-Kraftwerk 1.

Die in Fig. 3 dargestellte Reglerstruktur weist eine Abfahreinrichtung 13 auf, die im vorliegenden Ausführungsbeispiel auch als eine Vorsteuer-Vorrichtung 11 ausgebildet sein kann.

Die Abfahreinrichtung 13 schaltet durch ihren jeweiligen Abfahr-Sollwert-Verlauf ASVI, ASV II auch einen Abfahr-Vorsteuer-Verlauf AVV I für die Gasturbine 2 und einen Abfahr-Vorsteuer-Verlauf AVV II für die Dampfturbine 3 als jeweilige Stellwerte s direkt auf die Gasturbine 2 bzw. die Regelstrecke-Gasturbine 6 und die Dampfturbine 3 bzw. die Regelstrecke-Dampfturbine 7. Dabei weisen der Abfahr-Vorsteuer-Verlauf AVV I für die Gasturbine 2 und der Abfahr-Vorsteuer-Verlauf AVV II für die Dampfturbine 3 im vorliegenden Ausführungsbeispiel jeweils eine Reihe von Werten abnehmender Größe auf, die aufeinander abgestimmt sind und die nacheinander aufgeschaltet werden, um so die Gasturbine 2 und die Dampfturbine 3 zum im Wesentlichen gleichen Zeitpunkt t1 (siehe Fig. 5) entlastet sind.

Es wird nun zusätzlich auf Fig. 4 Bezug genommen.

Dargestellt ist Steuerungsstruktur für das in Fig. 1 dargestellte GuD-Kraftwerk 1.

Die in Fig. 4 dargestellte Steuerungsstruktur weist eine Abfahreinrichtung 13 auf, die im vorliegenden Ausführungsbeispiel als ein Steuergerät 12 ausgebildet ist und eine Gasturbinen-Steuereinheit 13 zum Steuern der Gasturbine 2 und eine Dampfturbinen-Steuereinheit 14 zum Steuern der Dampfturbine 3 aufweist.

Die Abfahreinrichtung 13 schaltet einen Abfahr-Stellgrößen-Verlauf ASG I auf die Gasturbine 2 bzw. die Regelstrecke-Gasturbine 6 und einen Abfahr-Stellgrößen-Verlauf ASG I auf die Dampfturbine 3 bzw. die Regelstrecke-Dampfturbine 7, um so die Gasturbine 2 und die Dampfturbine 3 zum im Wesentlichen gleichen Zeitpunkt t1 (siehe Fig. 5) entlastet sind.

Es wird nun zusätzlich auf Fig. 5 Bezug genommen.

Dargestellt ist in schematischer Form der Drehzahlverlauf n und der Blockleistungsverlaufs P des GuD-Kraftwerks 1.

Ein Abfahren beginnt zum Zeitpunkt t0. Somit wird zum Zeitpunkt die Abfahreinrichtung 13 aktiv.

Wenn die Abfahreinrichtung 13 als Sollwertvorgabe-Vorrichtung 10 ausgebildet ist schaltet die Abfahreinrichtung 13 den Abfahr-Sollwert-Verlauf ASV I für die Gasturbine 2 und den Abfahr-Sollwert-Verlauf ASV II für die Dampfturbine 3 als jeweilige Sollwerte auf den Gasturbinen-Leistungsregler 8 und Dampfturbinen-Leistungsregler 9, um so die Gasturbine 2 und die Dampfturbine 3 zum im Wesentlichen gleichen Zeitpunkt t1 entlastet sind.

Wenn die Abfahreinrichtung 13 als eine Vorsteuer-Vorrichtung 11 ausgebildet ist schaltet die Abfahreinrichtung 13 einen Abfahr-Vorsteuer-Verlauf AVV I für die Gasturbine 2 und einen Abfahr-Vorsteuer-Verlauf AVV II für die Dampfturbine 3 als jeweilige Stellwerte direkt auf die Gasturbine 2 bzw. die Regelstrecke-Gasturbine 6 und die Dampfturbine 3 bzw. die Regelstrecke-Dampfturbine 7, um so die Gasturbine 2 und die Dampfturbine 3 zum im Wesentlichen gleichen Zeitpunkt t1 entlastet sind.

Wenn die Abfahreinrichtung 13 als ein Steuergerät 12 ausgebildet ist schaltet die Abfahreinrichtung 13 einen Abfahr-Stellgrößen-Verlauf ASG I auf die Gasturbine 2 bzw. die Regelstrecke-Gasturbine 6 und einen Abfahr-Stellgrößen-Verlauf ASG I auf die Dampfturbine 3 bzw. die Regelstrecke-Dampfturbine 7, um so die Gasturbine 2 und die Dampfturbine 3 zum im Wesentlichen gleichen Zeitpunkt t1 entlastet sind.

So kann innerhalb eines Zeitfensters, das sich vom Zweitpunkt t0 bis zum Zeitpunkt t1 erstreckt, d.h. sich von Beginn des Abfahrvorgangs bis zum Abfall der Dampftemperatur auf einen unteren Grenzwert erstreckt, die Gastturbine 2 zeitgleich mit der Dampfturbine 3 abgefahren werden. Ferner fällt innerhalb des Zeitfensters zwischen den Zeitpunkten t0 bis T1 der Blockleistungsverlaufs P auf null.

So kann das Abfahren beschleunigt werden. Von Vorteil, aber keine Voraussetzung ist hierbei, dass die Gasturbine 2 eine hohe Dynamik aufweist.

## Patentansprüche

1. Verfahren zum Betreiben eines GuD-Kraftwerks (1), wobei das GuD-Kraftwerk (1) eine Gasturbine (2) und eine Dampfturbine (3) sowie eine Abfahreinrichtung (13) aufweist, und wobei zum Abfahren der Gasturbine (2) und der Dampfturbine (3) die Gasturbine (2) und die Dampfturbine (3) innerhalb eines Zeitfensters, das sich von Beginn des Abfahrvorgangs zu einem ersten Zeitpunkt (t0) bis zum Abfall der Dampftemperatur auf einen unteren Grenzwert zu einem zweiten Zeitpunkt (t1) erstreckt,
**dadurch gekennzeichnet, dass**
die Abfahreinrichtung (13) die Gasturbine (2) und die Dampfturbine (3) derart betreibt, dass die Gasturbine (2) und die Dampfturbine (3) zum im Wesentlichen gleichen Zeitpunkt (t1) entlastet sind und die Blockleistung auf Null fällt, wobei in dem GuD-Kraftwerk (1) gespeicherte Wärmeenergie ein sofortiges Absinken einer Dampftemperatur auf einen Betrieb unterhalb einer Mindestleistung der Gasturbine (2) innerhalb des Zeitfensters verhindert.

2. Verfahren nach Anspruch 1,
wobei der Gasturbine (2) ein Gasturbinen-Leistungsregler (7) und der Dampfturbine (3) ein Dampfturbinen-Leistungsregler (8) zugeordnet ist, und wobei dem Gasturbinen-Leistungsregler (7) und dem Dampfturbinen-Leistungsregler (8) der jeweilige Sollwert mit einem jeweiligen Abfahr-Sollwert-Verlauf (ASV I, ASV II) vorgegeben wird, um die Gasturbine (2) und die Dampfturbine (3) zum im Wesentlichen gleichen Zeitpunkt (t1) entlastet sind.

3. Verfahren nach Anspruch 1,
wobei der Gasturbine (2) ein Gasturbinen-Leistungsregler (7) und der Dampfturbine (3) ein Dampfturbinen-Leistungsregler (8) zugeordnet ist, und wobei die jeweilige Stellgröße des Gasturbinen-Leistungsreglers (7) und des Dampfturbinen-Leistungsreglers (8) jeweils mit einem Abfahr-Vorsteuer-Verlauf (AVV I, AVV II) beaufschlagt werden, um die Gasturbine (2) und die Dampfturbine (3) zum im Wesentlichen gleichen Zeitpunkt (t1) entlastet sind.

4. Verfahren nach Anspruch 1,
wobei mit der Abfahreinrichtung (13) jeweils der Gasturbine (2) und der Dampfturbine (3) jeweils ein Abfahr-Stellgrößen-Verlauf (ASG I, ASG II) vorgegeben wird, um die Gasturbine (2) und die Dampfturbine (3) zum im Wesentlichen gleichen Zeitpunkt (t1) zu entlasten.

5. Computerprogrammprodukt,
mit Komponenten, die dazu ausgebildet sind, ein Verfahren nach einem der Ansprüche 1 bis 4 auszuführen.

6. GuD-Kraftwerk (1) mit einer Gasturbine (2) und einer Dampfturbine (3) sowie einer Abfahreinrichtung (13), wobei die Abfahreinrichtung (13) dazu ausgebildet ist, die Gasturbine (2) und die Dampfturbine (3) innerhalb eines Zeitfensters, das sich von Beginn des Abfahrvorgangs zu einem ersten Zeitpunkt (t0) bis zum Abfall der Dampftemperatur auf einen unteren Grenzwert zu einem zweiten Zeitpunkt (t1) erstreckt, derart zu betreiben, **gekennzeichnet dadurch,**
**dass** die Gasturbine (2) und die Dampfturbine (3) zum im Wesentlichen gleichen Zeitpunkt (t1) entlastet sind und die Blockleistung auf Null fällt, wobei in dem GuD-Kraftwerk (1) gespeicherte Wärmeenergie ein sofortiges Absinken einer Dampftemperatur auf einen Betrieb unterhalb einer Mindestleistung der Gasturbine (2) innerhalb des Zeitfensters verhindert.

7. GuD-Kraftwerk (1) nach Anspruch 6,
wobei der Gasturbine (2) ein Gasturbinen-Leistungsregler (7) und der Dampfturbine (3) ein Dampfturbinen-Leistungsregler (8) zugeordnet ist, und wobei eine Abfahreinrichtung (13) vorgesehen ist, die dem Gasturbinen-Leistungsregler (7) und dem Dampfturbinen-Leistungsregler (8) den jeweiligen Sollwert gemäß einem jeweiligen Abfahr-Sollwert-Verlauf (ASV I, ASV II) vorgibt, um die Gasturbine (2) und die Dampfturbine (3) zum im Wesentlichen gleichen Zeitpunkt (t1) entlastet sind.

8. GuD-Kraftwerk (1) nach Anspruch 6,
wobei der Gasturbine (2) ein Gasturbinen-Leistungsregler (7) und der Dampfturbine (3) ein Dampfturbinen-Leistungsregler (8) zugeordnet ist, und wobei die Abfahreinrichtung (13) den Gasturbinen-Leistungsregler (7) und den Dampfturbinen-Leistungsregler (8) jeweils mit einem Abfahr-Vorsteuer-Verlauf (AVV I, AVV II) beaufschlagt, um die Gasturbine (2) und die Dampfturbine (3) zum im Wesentlichen gleichen Zeitpunkt (t1) zu entlasten.

9. GuD-Kraftwerk (1) nach Anspruch 6,
wobei eine Abfahreinrichtung (13) vorgesehen ist, die jeweils einen Abfahr-Stellgrößen-Verlauf (ASG I, ASG II) vorgibt, um die Gasturbine (2) und die Dampfturbine (3) zum im Wesentlichen gleichen Zeitpunkt (t1) entlastet sind.

## Claims

1. Method for operating a combined cycle power plant (1), wherein the combined cycle power plant (1) has a gas turbine (2) and a steam turbine (3) as well as a shutting-down device (13), and wherein, for shutting down the gas turbine (2) and the steam turbine (3), the gas turbine (2) and the steam turbine (3) are operated within a time window that extends from the beginning of the shutting-down procedure at a first time (t0) to the falling of the steam temperature to a lower limit value at a second time (t1),
**characterized in that**
the shutting-down device (13) operates the gas turbine (2) and the steam turbine (3) in such a manner that the gas turbine (2) and the steam turbine (3) are relieved substantially at the same time (t1) and the block power falls to zero, wherein thermal energy that is stored in the combined cycle power plant (1) prevents immediate falling of a steam temperature to operation below a minimum power output of the gas turbine (2) within the time window.

2. Method according to Claim 1,
wherein the gas turbine (2) is assigned a gas-turbine power controller (7) and the steam turbine (3) is assigned a steam-turbine power controller (8), and wherein the gas-turbine power controller (7) and the steam-turbine power controller (8) are predefined the specified respective setpoint value with a respective shutting-down setpoint-value profile (ASV I, ASV II), in order that the gas turbine (2) and the steam turbine (3) are relieved substantially at the same time (t1).

3. Method according to Claim 1,
wherein the gas turbine (2) is assigned a gas-turbine power controller (7) and the steam turbine (3) is assigned a steam-turbine power controller (8), and wherein the respective manipulated variable of the gas-turbine power controller (7) and of the steam-turbine power controller (8) is respectively subjected to a shutting-down pre-control profile (AW I, AVV II), in order that the gas turbine (2) and the steam turbine (3) are relieved substantially at the same time (t1).

4. Method according to Claim 1,
wherein with the shutting-down device (13) the gas turbine (2) and the steam turbine (3) are respectively predefined a specified shutting-down manipulated-variable profile (ASG I, ASG II), in order for the gas turbine (2) and the steam turbine (3) to be relieved substantially at the same time (t1).

5. Computer program product,
with components which are configured to carry out a method according to one of Claims 1 to 4.

6. Combined cycle power plant (1) with a gas turbine (2) and a steam turbine (3) as well as a shutting-down device (13), wherein the shutting-down device (13) is designed to operate the gas turbine (2) and the steam turbine (3) within a time window that extends from the beginning of the shutting-down procedure at a first time (t0) to the falling of the steam temperature to a lower limit value at a second time (t1) in such a manner,
**characterized in that**
the gas turbine (2) and the steam turbine (3) are relieved substantially at the same time (t1) and the block power falls to zero, wherein thermal energy that is stored in the combined cycle power plant (1) prevents immediate falling of a steam temperature to operation below a minimum power output of the gas turbine (2) within the time window.

7. Combined cycle power plant (1) according to claim 6, wherein the gas turbine (2) is assigned a gas-turbine power controller (7) and the steam turbine (3) is assigned a steam-turbine power controller (8), and wherein a shutting-down device (13) is provided, which predefines for the gas turbine power controller (7) and the steam-turbine power controller (8) the specified respective setpoint value according to a respective shutting-down setpoint-value profile (ASV I, ASV II), in order that the gas turbine (2) and the steam turbine (3) are relieved substantially at the same time (t1).

8. Combined cycle power plant (1) according to claim 6, wherein the gas turbine (2) is assigned a gas-turbine power controller (7) and the steam turbine (3) is assigned a steam-turbine power controller (8), and wherein the shutting-down device (13) subjects the gas-turbine power controller (7) and the steam-turbine power controller (8) in each case to a shutting-down pre-control profile (AW I, AVV II), in order for the gas turbine (2) and the steam turbine (3) to be relieved substantially at the same time (t1).

9. Combined cycle power plant (1) according to claim 6, wherein a shutting-down device (13) is provided, which predefines in each case a shutting-down manipulated variable profile (ASG I, ASG II), in order that the gas turbine (2) and the steam turbine (3) are relieved substantially at the same time (t1).

## Revendications

1. Procédé pour faire fonctionner une centrale (1) à turbine à gaz à cycle combiné, la centrale (1) à turbine à cycle combiné ayant une turbine (2) à gaz et une turbine (3) à vapeur, ainsi qu'un dispositif (13) d'arrêt, et dans lequel, pour arrêter la turbine (2) à gaz et la turbine (3) à vapeur, on fait fonctionner la turbine (2) à gaz et la turbine (3) à vapeur dans un créneau temporel, qui s'étend du début de l'opération d'arrêt à un premier instant (t0) jusqu'à l'abaissement de la température de la vapeur à une valeur limite inférieure à un deuxième instant (t1), **caractérisé en ce que**
le dispositif (13) d'arrêt fait fonctionner la turbine (2) à gaz et la turbine (3) à vapeur de manière à décharger la turbine (2) à gaz et la turbine (3) à vapeur, sensiblement au même instant (t1) et de manière à ce que la puissance du bloc s'abaisse à zéro, dans lequel de l'énergie calorifique emmagasinée dans la centrale (1) à turbine à vapeur à cycle combiné empêche, dans le créneau temporel, un abaissement immédiat d'une température de la vapeur à un fonctionnement en dessous d'une puissance minimum de la turbine (2) à gaz.

2. Procédé suivant la revendication 1,
dans lequel à la turbine (2) à gaz est associé un régleur (7) de puissance de turbine à gaz et à la turbine (3) à vapeur, un régleur (8) de puissance de turbine à vapeur, et dans lequel on prescrit, au régleur (7) de puissance de turbine à gaz et au régleur (8) de puissance de turbine à vapeur, la valeur de consigne respective, avec une courbe (ASV I, ASV II) de valeurs de consigne d'arrêt respectives, afin de décharger, sensiblement au même instant (t1), la turbine (2) à gaz et la turbine (3) à vapeur.

3. Procédé suivant la revendication 1,
dans lequel à la turbine (2) à gaz est associé un régleur (7) de puissance de turbine à gaz et à la turbine (3) à vapeur, un régleur (8) de puissance de turbine à vapeur, et dans lequel les grandeurs de réglage respectives du régleur (7) de puissance de turbine à gaz et du régleur (8) de puissance de turbine à vapeur sont soumises chacune à une courbe (AVV I, AVV II) pilote d'arrêt, afin de décharger, sensiblement au même instant (t1), la turbine (2) à gaz et la turbine (3) à vapeur.

4. Procédé suivant la revendication 1,
dans lequel, par le dispositif (13) d'arrêt, on prescrit, respectivement, à la turbine (2) à gaz et à la turbine (3) à vapeur, respectivement, une courbe (ASG I, ASG II) de grandeur de réglage d'arrêt, afin de décharger, sensiblement au même instant (t1), la turbine (2) à gaz et la turbine (3) à vapeur.

5. Produit de programme d'ordinateur,
ayant des composants constitués pour exécuter un procédé suivant l'une des revendications 1 à 4.

6. Centrale (1) à turbine à gaz à cycle combiné, comprenant une turbine (2) à gaz et une turbine (3) à vapeur, ainsi qu'un dispositif (13) d'arrêt, le dispositif (13) d'arrêt étant constitué pour faire fonctionner la turbine (2) à gaz et la turbine (3) à vapeur dans un créneau temporel, qui s'étend du début de l'opération d'arrêt à un premier instant (t0) jusqu'à l'abaissement de la température de la vapeur à une valeur limite inférieure à un deuxième instant (t1), **caractérisé en ce que**
la turbine (2) à gaz et la turbine (3) à vapeur sont déchargées, sensiblement au même instant (t1), et la puissance du bloc s'abaisse à zéro, de l'énergie calorifique emmagasinée dans la centrale (1) à turbine à vapeur à cycle combiné empêchant, dans le créneau temporel, un abaissement immédiat d'une température de la vapeur à un fonctionnement en dessous d'une puissance minimum de la turbine (2) à gaz.

7. Centrale (1) à turbine à gaz à cycle combiné suivant la revendication 6,
dans laquelle, à la turbine (2) à gaz est associé un régleur (7) de puissance de turbine à gaz et à la turbine (3) à vapeur, un régleur (8) de puissance de turbine à vapeur, et dans laquelle il est prévu un dispositif (13) d'arrêt, qui prescrit au régleur (7) de puissance d'une turbine à gaz et au régleur (8) de puissance d'une turbine à vapeur, la valeur de consigne respective suivant une courbe (ASV I, ASV II) de valeurs de consigne d'arrêt respectives, afin de décharger la turbine (2) à gaz et la turbine (3) à vapeur, sensiblement au même instant (t1).

8. Centrale (1) à turbine à gaz à cycle combiné suivant la revendication 6,
dans laquelle à la turbine (2) à gaz est associé un régleur (7) de puissance d'une turbine à gaz et à la turbine (3) à vapeur, un régleur (8) de puissance d'une turbine à vapeur, et dans laquelle le dispositif (13) d'arrêt soumet le régleur (7) de puissance d'une turbine à gaz et le régleur (8) de puissance d'une turbine à vapeur, respectivement, à une courbe (AVV I, AVV II) pilote d'arrêt, afin de décharger la turbine (2) à gaz et la turbine (3) à vapeur, sensiblement au même instant (t1).

9. Centrale (1) à turbine à gaz à cycle combiné suivant la revendication 6,
dans laquelle il est prévu un dispositif (13) d'arrêt, qui prescrit une courbe (ASG I, ASG II) de grandeur de réglage d'arrêt, afin de décharger la turbine (2) à gaz et la turbine (3) à vapeur, sensiblement au même instant (t1).
